Europäisches Patentamt

**European Patent Office**

Office européen des brevets

(19)

(11) Veröffentlichungsnummer: **0 040 722**
**B1**

(12)

# EUROPÄISCHE PATENTSCHRIFT

(45) Veröffentlichungstag der Patentschrift:
**23.03.83**

(21) Anmeldenummer: **81103425.5**

(22) Anmeldetag: **06.05.81**

(51) Int. Cl.³: **C 01 G 49/06,** C 09 C 1/24,
**H 01 F 1/11**

(54) **Verfahren zur Herstellung von synthetischem Lepidokrokit.**

(30) Priorität: **23.05.80 DE 3019764**

(43) Veröffentlichungstag der Anmeldung:
**02.12.81 Patentblatt 81/48**

(45) Bekanntmachung des Hinweises auf die Patenterteilung:
**23.03.83 Patentblatt 83/12**

(84) Benannte Vertragsstaaten:
**DE FR GB NL**

(56) Entgegenhaltungen:
**EP-A-0 000 749**
**DE-A-2 735 315**
**DE-B-1 061 760**
**FR-A-2 416 869**
**US-A-4 086 174**
**US-A-4 176 172**
**ZEITSCHRIFT FÜR ANORGANISCHE UND ALL-GEMEINE CHEMIE, Band 298, 1959 Leipzig, U. SCHWERTMANN »Über die Synthese definier-ter Eisenoxyde unter verschiedenen Bedingun-gen«, Seiten 337 bis 348**

(73) Patentinhaber: **BASF Aktiengesellschaft,
Carl-Bosch-Strasse 38, D-6700 Ludwigshafen (DE)**

(72) Erfinder: **Rudolf, Peter, Dr., Wiesenstrasse 11,
D-6701 Neuhofen (DE)**

# 0 040 722

## Verfahren zur Herstellung von synthetischem Lepidokrokit

Die Erfindung betrifft ein Verfahren zur Herstellung von synthetischem Lepidokrokit mit einem Gehalt an $\alpha$-Eisen(III)oxidhydroxid von unter 5% durch Umsetzen einer wäßrigen Eisen(II)chlorid-Lösung mit wäßrigen Lösungen von Alkalimetallhydroxiden unter gleichzeitiger Oxidation mit Luftsauerstoff sowie seine Verwendung als lasierendes Farbpigment.

Die Herstellung von synthetischem Lepidokrokit ist an sich bekannt und mehrfach beschrieben. So läßt sich Lepidokrokit beispielsweise durch Ausfällen von Eisen(II)hydroxid aus einer Eisen(II)chlorid-lösung mit Ammoniak bei pH = 7 und einer Temperatur von 20 bis 50°C und durch anschließende Oxidation des ausgefällten Hydroxids mit Luft unter Beibehaltung des pH-Wertes herstellen (Schwertmann, Zeitschrift f. Anorg. Chemie 298 (1959), (337 – 348). Aus der DE-C-1 223 352 ist ein weiteres Verfahren zur Herstellung des Lepidokrokits bekannt, bei dem die Keimbildung durch Fällung von Eisen(II)salzlösungen mit Alkali- oder Erdalkalibasen und Oxidation des Eisen(II)hydroxids oder -carbonats mit Sauerstoff, Luft, organischen Nitroverbindungen oder anderen Oxidationsmitteln erfolgt und gegebenenfalls ein Keimwachstum des $\gamma$-FeOOH in Eisen(II)salzlösungen entweder in Gegenwart von metallischem Eisen oder in Eisen(II)salzlösungen bei gleichzeitiger Zugabe äquivalenter Mengen von Eisen(II)ionen und Alkali- oder Erdalkalilösungen oder -suspensionen oder bei gleichzeitiger Zugabe äquivalenter Mengen von Eisen(III)ionen und Alkali- oder Erdalkalibasen, -lösungen oder -suspensionen in beiden Fällen unter Verwendung der Oxidationsmittel durchgeführt wird und wobei vor, während oder nach der Keimbildung bzw. während des Keimwachstumsprozesses kleine Mengen von Arsenationen oder Phosphationen, sowie kleine Mengen dreiwertiger Ionen der Elemente B, Al, Ga, Cr, Mn und/oder Fe dem Reaktionsmedium zugegeben werden.

Der nach dem bekannten Stand der Technik hergestellte Lepidokrokit läßt sich in seinen Eigenschaften, d. h. hinsichtlich spezifischer Oberfläche, Form und auch $\alpha$-Eisen(III)oxidhydroxid-Anteil durch Variation von Konzentration der Einsatzstoffe sowie von Temperatur- und pH-Wert-Änderungen in der Keimbildungs- bzw. Aufwachsphase beeinflussen. Er findet als Farbpigment, als Ausgangsmaterial für die Herstellung von Ferriten und nach seiner Umwandlung in nadelförmiges Gamma-Eisen(III)oxid als magnetisches Material für magnetische Aufzeichnungsmedien Verwendung. Je nach genanntem Verwendungszweck stellen sowohl Teilchenform und Teilchengröße als auch Teilchengrößenverteilung wichtige Parameter dar. Sie bedingen bei den Farbpigmenten eine Änderung der Farbvariation. Bei den magnetischen Materialien für Aufzeichnungsmedien beeinflussen diese Parameter die magnetischen und damit die elektroakustischen Eigenschaften, hinsichtlich der Ferrit-Herstellung wirken sie sich bei der Reaktivität der Komponenten aus. Insbesondere bei der Verwendung des synthetischen Lepidokrokits oder der daraus hergestellten anderen Eisenoxide, als sogenannte lasierende Farbpigmente ist ein außerordentlich feinteiliges Material wünschenswert.

Es bestand daher die Aufgabe, ein Verfahren zur Herstellung von synthetischem Lepidokrokit bereitzustellen, das auf einfache und wirtschaftliche Weise ein besonders feinteiliges Material ergibt und bei dem sich die Feinteiligkeit durch geringe Verfahrensvariationen steuern läßt.

Es wurde nun gefunden, daß sich synthetischer Lepidokrokit mit einem Gehalt an $\alpha$-Eisen(III)oxidhydroxid von unter 5% durch Umsetzen einer wäßrigen Eisen(II)chlorid-Lösung mit wäßrigen Alkalimetallhydroxiden unter gleichzeitiger Oxidation mit Luftsauerstoff mit den aufgabengemäß geforderten Eigenschaften herstellen läßt, wenn der wäßrigen Eisen(II)chlorid-Lösung 0,05 bis 5 Molprozent an solchen organischen Verbindungen zugesetzt werden, welche mit Eisen(III)ionen stabile Chelatkomplexe bilden.

Wesentlich ist, daß diese Chelatkomplexe bildenden Verbindungen nur mit Eisen(III)ionen, nicht aber mit Eisen(II)ionen stabile Komplexe bilden können.

Zur Durchführung des erfindungsgemäßen Verfahrens hat es sich als besonders zweckmäßig herausgestellt, aus einer wäßrigen Eisen(II)chlorid-Lösung, welche eine zur Komplexbildung geeignete organische Verbindung enthält, mittels einer wäßrigen Alkalimetallhydroxid-Lösung bei Temperaturen zwischen 10 und 36°C und kräftigem Rühren zur Erzeugung feiner Luftblasen, Eisen(III)oxidhydrat-Keime bis zu einer Menge von 25 bis 70 Molprozent des eingesetzten Eisens zu bilden, aus denen dann anschließend bei einer Temperatur zwischen 20 und 70°C und bei einem durch Zusatz weiterer Alkalimengen eingestellten pH-Wert von 4,0 bis 5,8 unter intensiver Luftverteilung durch Zuwachs das Endprodukt entsteht. Nach beendetem Wachstum soll der Feststoffgehalt an Eisen(III)oxidhydroxid in der wäßrigen Suspension zwischen 10 und 65 g/l, bevorzugt bei 15 bis 60 g/l, liegen. Nach dem Abfiltrieren und Auswaschen des Niederschlags wird der so erhaltene Lepidokrokit getrocknet.

Dabei wird der Eisen(II)chlorid-Lösung noch vor Beginn der Ausfällung der Komplexbildner in einer Menge von 0,05 bis 5, vorzugsweise von 0,1 bis 2 Molprozent, bezogen auf die in der Lösung vorhandenen Mole Eisen(II)ionen, zugesetzt. Entsprechende Chelatkomplexe bildenden Verbindungen sind an sich bekannt und werden vorwiegend in der analytischen Chemie benutzt. Unter den für das erfindungsgemäße Verfahren geeigneten mit Eisen(III)ionen stabile Chelatkomplexe bildenden Verbindungen wie Dicarbonsäuren, Hydroxycarbonsäuren, Aminocarbonsäuren u. a. haben sich

2

aromatische Sulfohydroxycarbonsäuren wie Sulfosalicylsäure als besonders vorteilhaft herausgestellt. Hervorzuheben ist, daß alle jene Komplexbildner, die nur Eisen(II)ionen, jedoch nicht mit Eisen(III)ionen stabile Chelatkomplexe bilden, wie z. B. 1.10-Phenanthroliniumchlorid oder 2,2'-Bipyridin, nicht den aufgabengemäß geforderten Lepidokrokit entstehen lassen.

Das erfindungsgemäße Verfahren ermöglicht somit auf einfache Weise einen extrem feinteiligen Lepidokrokit herzustellen, der zudem einen Geothit-Anteil von unter 5% aufweist. Während ohne Zusatz der Chelatkomplexbildner die spezifischen Oberflächen nach BET von nach dem Stand der Technik, z. B. gemäß DE-B-1 061 760, hergestelltem synthetischem Lepidokrokit zwischen 18 und 70 $m^2/g$ liegen, lassen sich gemäß der Erfindung spezifische Oberflächen von bis zu 243 $m^2/g$ erzielen. Bei der Zugabe von etwa 0,1 Molprozent Komplexbildner beträgt die spezifische Oberfläche im allgemeinen 40 – 60 $m^2/g$ und nimmt mit steigender Zugabe zu, um bei 5 Molprozent einen Grenzwert zu erreichen.

Der mit dem erfindungsgemäßen Verfahren hergestellte Lepidokrokit wird bevorzugt als lasierendes Farbpigment eingesetzt, wozu er sich wegen seiner besonders großen Oberfläche durch höhere Farbeinheit und Farbstärke auszeichnet. Aber auch als Ausgangsmaterial zur Herstellung von Ferriten auf keramischem Wege eignet sich dieser Lepidokrokit ausgezeichnet. Die für die Festkörperreaktion nötige Feinteiligkeit muß beim Einsatz des erfindungsgemäß hergestellten Lepidokrokits nicht erst durch intensives Mahlen erzeugt werden, sie besteht von Anfang an, so daß der technisch aufwendige Mahlvorgang, der zudem noch leicht unerwünschte Fehlstellen im Kristall auslöst, weitgehend vermieden werden kann.

Das erfindungsgemäße Verfahren sei anhand folgender Beispiele näher erläutert.

An den resultierenden Materialien wurde die spezifische Oberfläche $SN_2$ in $m^2/g$ mit der BET-Methode bestimmt, der Gehalt an Geothit röntgenographisch ermittelt sowie Teilchenform und Teilchenabmessung als elektronenmikroskopischen Aufnahmen (1 : 20 000 und 1 : 40 000) abgeleitet. Die Messung der Stampfdichte $\varrho_{ED}$ in $g/cm^3$ erfolgte nach Engelmann. Außerdem wurde die Bildung der Menge Lepidokrokit in g je Liter und Stunde ermittelt (RG).

## Beispiel A/1

Zu 2,7 Liter einer technischen Eisen(II)chlorid-Lösung, enthaltend 2,18 Mol Eisen(II)ionen, werden 1,5 Mol-% 5-Sulfosalicylsäure gegeben. Dann werden bei 28°C 2,18 Mol NaOH als verdünnte Natronlauge der vorgelegten Lösung zudosiert und damit 50% der Eisenionen ausgefällt. Nach beendeter Fällung werden unter heftigem Rühren 400 Liter Luft pro Stunde in die Suspension eingeleitet.

Die Keimphase ist dann beendet, wenn der pH-Wert der Suspension auf 3,3 gefallen ist. Die Temperatur wird jetzt auf 40°C angehoben und es werden 600 Liter Luft pro Stunde eingeleitet. Nun werden 2,4 Mol NaOH in 2 Liter Wasser gelöst und über eine automatische pH-Regelung bei pH = 5,5 der Suspension zudosiert. Die Reaktion ist beendet, sobald bei pH = 5,5 keine Natronlauge mehr zudosiert werden muß. Die Endkonzentration beträgt 32,3 g Lepidokrokit pro Liter Suspension. Das Pigment wird abfiltriert, mit Wasser chloridfrei gewaschen und bei 130°C getrocknet. Die Eigenschaften des Materials sind in der Tabelle 1 aufgeführt.

## Beispiel A/2

Es wird wie in Beispiel A/1 verfahren, jedoch mit dem Unterschied, daß 1,0 Mol-% 5-Sulfosalicylsäure der Eisen(II)chloridlösung zugesetzt werden.
Die Eigenschaften des Lepidokrokits sind in Tabelle 1 angegeben.

## Beispiel A/3

Es wird wie in Beispiel A/1 verfahren, jedoch mit dem Unterschied, daß 0,5 Mol-% 5-Sulfosalicylsäure der $FeCl_2$-Lösung zugesetzt werden. Die Eigenschaften des Lepidokrokits sind in Tabelle 1 angegeben.

## Beispiel A/4

Es wird wie in Beispiel A/1 verfahren, jedoch mit dem Unterschied, daß 0,2 Mol-% 5-Sulfosalicylsäure der $FeCl_2$-Lösung zugesetzt werden. Die Eigenschaften des Lepidokrokits sind in Tabelle 1 angegeben.

## Vergleichsversuch B/1

Es wird wie in Beispiel A/1 beschrieben verfahren, jedoch ohne Zusatz eines organischen Komplexbildners. Die Eigenschaften des Lepidokrokits sind in Tabelle 1 angegeben.

Tabelle 1

| Beispiel | 5-Sulfosalicylsäure | RG | $\rho_{ED}$ | $SN_2$ | $\alpha$-FeOOH % |
|---|---|---|---|---|---|
| A/1 | 1,5 Mol-% | — | 0,83 | 143,2 | 1% |
| A/2 | 1 Mol-% | 29,6 | 0,81 | 123,1 | 0% |
| A/3 | 0,5 Mol-% | 27,7 | 0,76 | 96,6 | 0% |
| A/4 | 0,2 Mol-% | 16,5 | 0,62 | 57,0 | 0% |
| B/1 | — | 10,7 | 0,32 | 29,8 | 2% |

## Beispiel C/1

Es wird wie im Beispiel A/1 verfahren, jedoch mit dem Unterschied, daß 2 Mol-% Weinsäure der FeCl$_2$-Lösung zugesetzt werden. Die Eigenschaften des Lepidokrokits sind in Tabelle 2 angegeben.

## Beispiel C/2

Es wird wie im Beispiel A/1 verfahren, jedoch mit dem Unterschied, daß 1 Mol-% Weinsäure der FeCl-Lösung zugesetzt werden. Die Eigenschaften des Lepidokrokits sind in Tabelle 2 angegeben.

## Beispiel C/3

Es wird wie im Beispiel A/1 verfahren, jedoch mit dem Unterschied, daß 0,5 Mol-% Weinsäure der FeCl$_2$-Lösung zugesetzt werden. Die Eigenschaften des Lepidokrokits sind in Tabelle 2 angegeben.

## Beispiel C/4

Es wird wie im Beispiel A/1 verfahren, jedoch mit dem Unterschied, daß 0,2 Mol-% Weinsäure der FeCl$_2$-Lösung zugesetzt werden. Die Eigenschaften des Lepidokrokits sind in Tabelle 2 angegeben.

## Beispiel D/1 bis D/4

Es wird wie im Beispiel A/1 verfahren, jedoch mit dem Unterschied, daß der FeCl$_2$-Lösung folgende Mengen an Zitronensäure zugesetzt werden:

Beispiel D/1: 2,0 Mol-%
Beispiel D/2: 1,0 Mol-%
Beispiel D/3: 0,5 Mol-%
Beispiel D/4: 0,2 Mol-%

Die Eigenschaften des Lepidokrokits der Beispiele D/1 bis D/4 sind in Tabelle 2 aufgeführt.

## Beispiel E/1 bis E/5

Es wird wie im Beispiel A/1 verfahren, jedoch mit dem Unterschied, daß der FeCl$_2$-Lösung folgende Mengen Äthylendiamintetraessigsäure zugesetzt werden:

4

Beispiel E/1:  2,0 Mol-%
Beispiel E/2:  1,0 Mol-%
Beispiel E/3:  0,5 Mol-%
Beispiel E/4:  0,2 Mol-%
Beispiel E/5:  0,1 Mol-%

Die Eigenschaften des Lepidokrokits sind in Tabelle 2 angegeben.


## Beispiel F/1 und F/2

Es wird wie im Beispiel A/1 verfahren, jedoch mit dem Unterschied, daß der $FeCl_2$-Lösung 0,2 Mol-% Brenzcatechindisulfonsäure-3,5-dinatriumsalz-monohydrat für Beispiel F/1 und 0,5 Mol-% für Beispiel F/2 zugefügt werden. Die Eigenschaften des Lepidokrokits sind in Tabelle 2 angegeben.


## Vergleichsversuche G/1 bis G/4

Es wird wie im Beispiel A/1 verfahren, jedoch mit dem Unterschied, daß der $FeCl_2$-Lösung folgende Mengen selektiv mit Eisen(II)ionen stabile Chelatkomplexe bildende organischer Komplexbildner zugesetzt werden.

Versuch G/1:  0,2 Mol-%   2,2'-Bipyridin
Versuch G/2:  0,78 Mol-%  2,2'-Bipyridin
Versuch G/3:  0,2 Mol-%   1,10-Phenanthroliniumchlorid
Versuch G/4:  0,78 Mol-%  1,10-Phenanthroliniumchlorid

Die Eigenschaften der auf diese Weise erhaltenen Lepidokrokit-Materialien sind in Tabelle 2 aufgeführt.


## Beispiel H

Zu 13,5 l einer technischen Eisen(II)chlorid-Lösung, welche 10,9 Mol Eisen(II)ionen enthält, werden 1,5 Mol% 5-Sulfosalicylsäure hinzugefügt. Dann werden bei 28°C 10,9 Mol NaOH als verdünnte Natronlauge der vorgelegten Lösung zudosiert und damit 50% der Eisenionen ausgefällt. Dabei steigt die Temperatur auf 34°C an. Nach beendeter Fällung werden unter heftigem Rühren 1800 l Luft pro Stunde in die Suspension eingeleitet. Während der Keimphase ist die Temperatur von 34°C auf 28°C zurückgegangen. Die Keimphase ist beendet, wenn der pH-Wert auf 3,3 gefallen ist. Die Temperatur wird auf 34°C angehoben und es werden 2000 l Luft/h eingeleitet. 10,9 Mol werden in 10 Liter Wasser gelöst und mittels Schlauchpumpe so eindosiert, daß der pH-Wert stets bei 5,5 liegt. Die Reaktion ist dann beendet, wenn der pH-Wert plötzlich absteigt. Die Endkonzentration beträgt dann 32,3 g $\gamma$-FeOOH pro Liter Suspension. Das Pigment wird abfiltriert, mit $H_2O$ chloridfrei gewaschen und bei 130°C getrocknet.
Die Eigenschaften des so hergestellten feinteiligen Lepidokrokits sind in Tabelle 2 aufgeführt.

Tabelle 2

| Beispiel | Zusatz | RG | $\rho_{ED}$ | $SN_2$ | $\alpha$-FeOOH % |
|---|---|---|---|---|---|
| C/1 | 2 Mol-% Weinsäure | 27,7 | 0,69 | 95,0 | 0 |
| C/2 | 1 Mol-% Weinsäure | 27,7 | 0,73 | 95,1 | 0 |
| C/3 | 0,5 Mol-% Weinsäure | 22,8 | 0,56 | 59,9 | 0 |
| C/4 | 0,2 Mol-% Weinsäure | 13,8 | 0,50 | 47,4 | 0 |
| D/1 | 2 Mol-% Zitronensäure | 38,7 | 0,83 | 62,8 | 0 |
| D/2 | 1 Mol-% Zitronensäure | 29,8 | 0,64 | 98,2 | |
| D/3 | 0,5 Mol-% Zitronensäure | 27,7 | 0,60 | 86,5 | 4 |
| D/4 | 0,2 Mol-% Zitronensäure | 18,4 | 0,53 | 60,9 | 5 |
| E/1 | 2 Mol-% Äthylendiamintetra-essigsäure | 29,8 | 0,64 | 99,8 | 0 |
| E/2 | 1 Mol-% Äthylendiamintetra-essigsäure | 27,7 | 0,58 | 85,9 | 0 |
| E/3 | 0,5 Mol-% Äthylendiamintetra-essigsäure | 13,4 | 0,58 | 64,5 | 0 |
| E/4 | 0,2 Mol-% Äthylendiamintetra-essigsäure | 12,5 | 0,46 | 38,9 | 0 |
| E/4 | 0,1 Mol-% Äthylendiamintetra-essigsäure | 11,4 | 0,45 | 37,5 | 0 |
| F/1 | 0,2 Mol-% Tiron | 17,6 | 0,60 | 53,6 | 0 |
| F/2 | 0,5 Mol-% Tiron | 15,5 | 0,68 | 79,9 | 0 |
| G/1 | 0,2 Mol-% 2,2'-Bipyridin | 11,4 | 0,31 | 32,3 | 2 |
| G/2 | 0,78 Mol-% 2,2'-Bipyridin | 11,7 | 0,30 | 29,4 | 0 |
| G/3 | 0,2 Mol-% 1.10-Phenanthro-liniumchlorid | 11,7 | 0,29 | 32,5 | 0 |
| G/4 | 0,78 Mol-% 1.10-Phenanthro-liniumchlorid | 15,5 | 0,29 | 31,7 | 0 |
| H | 1,5 Mol-% 5-Sulfosalicylsäure | 25 | 0,93 | 184,6 | 0 |

Beispiel I/1

Zu 2,7 Liter einer technischen Eisen(II)chlorid-Lösung, enthaltend 2,18 Mol Eisen(II)ionen, werden 0,1 Mol-% 5-Sulfosalicylsäure gegeben. Dann werden bei 23°C 2,18 Mol NaOH als verdünnte Natronlauge der vorgelegten Lösung zudosiert und damit 50% der Eisenionen ausgefällt. Nach beendeter Fällung werden unter heftigem Rühren 400 Liter Luft pro Stunde in die Suspension eingeleitet.

Die Keimphase ist dann beendet, wenn der pH-Wert der Suspension auf 3,3 gefallen ist. Die Temperatur wird jetzt auf 25°C angehoben und es werden 600 l Luft pro Stunde eingeleitet. Nun werden 2,4 Mol NaOH in 2 Liter Wasser gelöst und über eine automatische pH-Regelung bei pH = 5,5

6

der Suspension zudosiert.

Die Reaktion ist beendet, sobald bei pH=5,5 keine Natronlauge mehr zudosiert werden muß. Die Endkonzentration beträgt 32,3 g Lepidokrokit pro Liter Suspension. Das Pigment wird abfiltriert, mit Wasser chloridfrei gewaschen und bei 130°C getrocknet.

Die Eigenschaften des Materials sind in der Tabelle 3 aufgeführt.

### Beispiel I/2 bis I/9

Es wird wie im Beispiel I/1 verfahren, jedoch mit dem Unterschied, daß folgende Mengen Sulfosailcylsäure der Eisen(II)chloridlösung zugesetzt werden:

Beispiel I/2:   0,2 Mol-%
Beispiel I/3:   0,5 Mol-%
Beispiel I/4:   1,0 Mol-%
Beispiel I/5:   1,5 Mol-%
Beispiel I/6:   2,0 Mol-%
Beispiel I/7:   2,5 Mol-%
Beispiel I/8:   3,0 Mol-%
Beispiel I/9:   5,0 Mol-%

Die Eigenschaften der Pigmente sind in Tabelle 3 aufgeführt.

### Vergleichsversuch I/10

Es wird wie in Beispiel I/1 verfahren, jedoch ohne Zusatz von organischem Komplexbildner. Die Pigmenteigenschaften sind ebenfalls in Tabelle 3 aufgeführt.

Tabelle 3

| Beispiel | Zusatz von Komplexbildner | $\rho_{ED}$ | $SN_2$ | $\alpha$-FeOOH % |
|---|---|---|---|---|
| I/1 | 0,1 Mol-% | 0,55 | 66,5 | 5% |
| I/2 | 0,2 Mol-% | 0,66 | 84,8 | 5% |
| I/3 | 0,5 Mol-% | 0,88 | 111,3 | 5% |
| I/4 | 1,0 Mol-% | 0,94 | 132,9 | 5% |
| I/5 | 1,5 Mol-% | 1,06 | 201 | 5% |
| I/6 | 2,0 Mol-% | 0,98 | 241,7 | 5% |
| I/7 | 2,5 Mol-% | 1,09 | 229,1 | 5% |
| I/8 | 3,0 Mol-% | 1,19 | 238,3 | 5% |
| I/9 | 5,0 Mol-% | 1,16 | 243,7 | 5% |
| Vergleichsversuch I/10 | — | 0,31 | 46,7 | 5% |

### Beispiel K

Zur Beurteilung der Farbeigenschaften der synthetischen Lepidokrokite werden entsprechend den Beispielen I/2, I/4 sowie H (Temperatur der Keim- und Wachstumsphase jedoch 20°C) hergestellte Muster mit einem solchen gemäß Vergleichsversuch I/10 verglichen. Dabei zeigt sich, daß mit der in einfacher Weise einstellbaren steigenden spezifischen Oberfläche sich stärker lasierende Farbpigmente erhalten lassen. Außerdem zeichnen sich diese Lepidokrokite durch einen von der spezifischen Oberfläche abhängigen Rotstich vorteilhaft aus.

**Patentansprüche**

1. Verfahren zur Herstellung von synthetischem Lepidokrokit mit einem Gehalt an $\alpha$-Eisen(III)oxidhydroxid von unter 5% durch Umsetzen einer wäßrigen Eisen(II)chlorid-Lösung mit wäßrigen Lösungen von Alkalimetallhydroxiden unter gleichzeitiger Oxidation mit Luftsauerstoff, dadurch gekennzeichnet, daß der Eisen(II)chlorid-Lösung 0,05 bis 5 Molprozent komplexbildende organischen Verbindungen zugesetzt werden, welche mit Eisen(III)ionen, nicht aber mit Eisen(II)ionen, stabile Chelatkomplexe bilden.

2. Verwendung des gemäß Anspruch 1 hergestellten synthetischen Lepidokrokits als lasierendes Farbpigment.

**Claims**

1. A process for the preparation of synthetic lepidocrocite containig less than 5% of $\alpha$-iron(III) oxide hydroxide, by reacting an aqueous iron(II) chloride solution with an aqueous solution of an alkali metal hydroxide, simultaneously with oxidation by atmospheric oxygen, wherein from 0.05 to 5 mole per cent of an organic compound, which forms a stable chelate complex with iron (III) ions, but not with iron(II) ions, are added to the iron(II) chloride solution.

2. The use of the synthetic lepidocrocite, prepared as claimed in claim 1, as a transparent colouring pigment.

**Revendications**

1. Procédé de préparation de lépidocrocite synthétique à teneur en hydroxyde d'oxyde de fer (III)-$\alpha$ inférieure à 5%, par réaction d'une solution aqueuse de chlorure de fer (II) avec des solutions aqueuses d'hydroxydes de métal alcalin, avec oxydation simultanée par l'oxygène de l'air, caractérisé par le fait qu'à la solution de chlorure de fer (II) on ajoute 0,05 à 5% (moles) des composés organiques complexants qui forment des complexes chelatés stables avec des ions fer (III) mais pas avec des ions fer (II).

2. Utilisation du lépidocrocite synthétique préparé selon la revendication 1, comme pigment glaçant.